# EUROPÄISCHE PATENTSCHRIFT

(11) **EP 4 142 325 B1**
(45) Veröffentlichungstag und Bekanntmachung des Hinweises auf die Patenterteilung: **06.08.2025**
(21) Anmeldenummer: 21192590.4
(22) Anmeldetag: 23.08.2021
(51) Int. Cl.: H04L 9/40, H04W 12/00, H05B 47/175, H04W 4/30, H04W 12/61, H04W 12/71

(54) **SICHERER ZUGRIFF AUF EINE STEUERUNG EINER LEUCHTE**
SECURE ACCESS TO A LIGHT CONTROLLER
ACCÈS SÉCURISÉ À UNE COMMANDE D'UN LUMINAIRE

(43) Veröffentlichungstag der Anmeldung: 01.03.2023
(73) Patentinhaber: Siteco GmbH, 83301 Traunreut (DE)
(72) Erfinder: Bornemann, Lars, 83254 Breitbrunn (DE)
(74) Vertreter: Schmidt, Steffen

(56) Entgegenhaltungen:
- WO-A1-2018/162397
- WO-A1-2019/152223
- US-A1- 2013 293 112
- US-A1- 2016 212 831
- US-A1- 2017 234 962
- US-A1- 2019 230 774

## Beschreibung

### Gebiet der Erfindung

Die Erfindung betrifft die Kontrolle des Zugriffs auf eine Steuerung einer Leuchte durch ein Datenverarbeitungssystem der Leuchte, wobei das Datenverarbeitungssystem eine empfangene Nachricht verwirft ohne eine Nachricht in Reaktion auf die empfangene Nachricht zu senden, wenn eine Senderadresse der empfangenen Nachricht eine erste Bedingung nicht erfüllt. Insbesondere betrifft die Erfindung ein Verfahren zur Kontrolle des Zugriffs auf die Steuerung der Leuchte, ein Datenverarbeitungssystem, ein Computerprogramm sowie ein computerlesbares Medium.

### Hintergrund

Ist ein technisches System wie zum Beispiel eine Leuchte oder ein Haushaltsgerät mit einer Kommunikationsvorrichtung ausgestattet, über die das technische System konfiguriert werden können soll, so kann dies die Gefahr eines unerlaubten Zugriffs auf die Steuerung des technischen Systems durch Dritte bergen. Dies gilt insbesondere für Kommunikationsvorrichtungen für die drahtlose Nachrichtenübertragung wie zum Beispiel Wi-Fi, Bluetooth, oder ZigBee. Da zahlreiche Geräte mit Wi-Fi, Bluetooth oder ZigBee kompatiblen Kommunikationsvorrichtungen ausgestattet sind, lassen sich technische Systeme mit derlei Kommunikationsvorrichtungen durch eine Vielzahl von Geräten erkennen und evtl. manipulieren.

Um unerlaubte Zugriffe zu erschweren, bieten Hersteller technischer Systeme oftmals proprietäre Lösungen des Systemzugriffs an, welche nur kabelgebunden oder nur mit speziellen Geräten möglich sind. Kabelgebundene Systeme wie Serviceboxen werden von verschiedenen Herstellern angeboten, sind jedoch häufig mit erheblichen Kosten für den Kunden verbunden. Weiterhin muss nicht selten die Firm- oder Software der kabelgebundenen Systeme aktualisiert werden, was den Aufwand für den Kunden erhöhen und zu Sicherheitsrisiken führen kann, etwa wenn erforderliche Aktualisierungen nicht durchgeführt werden.

Für Funklösungen gibt es nur bedingte Möglichkeiten, ein technisches System vor unerlaubten Zugriffen zu schützen. Zu diesen Möglichkeiten zählen insbesondere kryptographische Verfahren. Allerdings sind zahlreiche Schwächen und Angriffspunkte kryptographischer Verfahren bekannt.

Die WO 2019/152223 A1 beschreibt ein System von Leuchten, die in einem Mesh-Netzwerk miteinander kommunizieren. Jede Leuchte in dem Mesh-Netzwerk ist in der Lage, eine Benachrichtigung zu senden, wenn die Steuervorrichtung der Leuchte eine Zustandsänderung erkennt. Die Steuervorrichtung der Leuchte ist auch in der Lage, von anderen Leuchten stammende Benachrichtigungen zu empfangen, zu verarbeiten und Informationen aus empfangenen Benachrichtigungen an andere Leuchten im Mesh-Netzwerk weiterzuleiten.

Die US 2019/230774 A1 beschreibt eine Leuchte, die Folgendes umfasst: ein Funk-Kommunikationsmodul zum Konfigurieren der Leuchte; einen optischen Signaldetektor zum Erfassen eines optischen Signals, das Senderinformationen umfasst, die in dem optischen Signal enthalten sind; und eine Steuervorrichtung zum Steuern des Funk-Kommunikationsmoduls. Die Steuervorrichtung ist dazu ausgeführt, einen Identifikationscode und einen kryptographischen Schlüssel aus den Senderinformationen des optischen Signals zu extrahieren. Das Funk-Kommunikationsmodul wird aktiviert, um eine Funk-Kommunikationsverbindung zwischen dem Funk-Kommunikationsmodul und dem Sender des optischen Signals herzustellen, wenn der extrahierte Code mit einem Referenzcode übereinstimmt. Daten, die über die Funk-Kommunikationsverbindung gesendet werden, werden in Übereinstimmung mit dem kryptographischen Schlüssel verschlüsselt.

Die US 2017/234962 A1 beschreibt ein Verfahren zur Ortung eines Mobilgeräts, wobei ein Netzwerkknoten ein Trigger-Signal sendet, das Mobilgerät in Reaktion auf das Trigger-Signal ein Signal aussendet, und das von dem Mobilgerät gesendete Signal von mehreren Netzwerkknoten gemessen wird.

Die US 2013/293112 A1 beschreibt ein ferngesteuertes Beleuchtungssystem, wobei eine Leuchte eine Sende-Empfangseinheit für die drahtlose Nachrichtenübertragung aufweist.

Die US 2016/212831 A1 beschreibt System zur Fernsteuerung einer Vorrichtung mittels einer mobilen Steuereinheit. Die mobile Steuereinheit umfasst ein Zugriffssteuermodul, das es der mobilen Steuereinheit erlaubt, die Vorrichtung innerhalb eines Steuerzeitraums durch drahtlos übertragene Befehle zu steuern.

Die WO 2018/162397 A1 beschreibt ein Steuergerät zur drahtlosen Kommunikation mit einer Leuchte, wobei das Steuergerät dazu eingerichtet ist, einen eindeutigen Identifikator der Leuchte von der Leuchte zu empfangen. Ein zeitgebundener Schlüssel für die identifizierte Leuchte wird gespeichert. Der zeitgebundene Schlüssel wird aus einem Geräteschlüssel für die Leuchte und einem Zeitfenster, für das der zeitgebundene Schlüssel gültig verwendet werden darf, generiert. Das Steuergerät ist eingerichtet, eine mit dem zeitgebundenen Schlüssel verschlüsselte, Nachricht zu erzeugen und die verschlüsselte, Nachricht drahtlos an die Leuchte zu übertragen.

### Zusammenfassung der Erfindung

Eine Aufgabe der Erfindung besteht darin, die Sicherheit des Zugriffs auf eine Steuerung eines technischen Systems wie zum Beispiel einer Leuchte, eines Haushaltsgeräts oder einer industriellen Produktionsvorrichtung zu erhöhen.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein Verfahren zur Kontrolle eines Zugriffs auf eine Steuerung eines technischen Systems, wobei das Verfahren von einem Datenverarbeitungssystem des technischen Systems ausgeführt wird, und das Verfahren die folgenden Schritte umfasst: Empfangen einer ersten Nachricht durch eine Kommunikationsvorrichtung des Datenverarbeitungssystems; Bestimmen einer ersten Senderadresse auf der Grundlage der ersten Nachricht; in Abhängigkeit von der ersten Senderadresse, Bestimmen, ob eine erste Bedingung erfüllt ist; und wenn die erste Bedingung für die erste Senderadresse nicht erfüllt ist, Verwerfen der ersten Nachricht, ohne eine Nachricht in Reaktion auf die erste Nachricht zu senden. Ferner umfasst das Verfahren das Senden einer zweiten Nachricht in Reaktion auf die erste Nachricht, wenn die erste Bedingung für die erste Senderadresse erfüllt ist und optional eine oder mehrere weitere Bedingungen erfüllt sind.

Dabei ist das technische System insbesondere eine Leuchte, d.h. eine Vorrichtung zum Betreiben eines Leuchtmittels. Eine Leuchte kann ein Leuchtmittel oder mehrere Leuchtmittel umfassen. Es kann jedoch auch sein, dass eine Leuchte zur Aufnahme eines Leuchtmittels ausgeführt ist, jedoch kein Leuchtmittel umfasst.

Das Datenverarbeitungssystem ist vorzugsweise in einem Gehäuse der Leuchte angeordnet, das Datenverarbeitungssystem kann jedoch auch außerhalb eines Gehäuses der Leuchte angeordnet sein, oder die Leuchte kann kein Gehäuse umfassen.

Das Datenverarbeitungssystem umfasst einen Prozessor und einen Speicher. Bei dem Prozessor kann es sich beispielsweise um einen Microcontroller, einen Microprozessor, einen Prozessor für die digitale Signalverarbeitung oder einen anderen anwendungsspezifischen Prozessor handeln. Der Speicher des Datenverarbeitungssystems umfasst vorzugsweise einen nichtflüchtigen Speicher. Ferner kann das Datenverarbeitungssystem einen flüchtigen Speicher umfassen.

Die Leuchte kann eine Vorrichtung zur Steuerung der Leuchte umfassen. Die Vorrichtung zur Steuerung der Leuchte kann separat von dem Datenverarbeitungssystem sein und das Datenverarbeitungssystem kann mit der Vorrichtung zur Steuerung der Leuchte verbunden sein. Alternativ kann die Steuerung der Leuchte in dem Datenverarbeitungssystem integriert sein. In diesem Fall kann ein Softwaremodul zur Steuerung der Leuchte auf dem Speicher des Datenverarbeitungssystems gespeichert und der Prozessor des Datenverarbeitungssystems zur Ausführung des Softwaremoduls ausgeführt sein. Ferner können Konfigurationsparameter der Leuchte auf dem Speicher der Datenverarbeitungsvorrichtung gespeichert sein.

Die Kommunikationsvorrichtung ist vorzugsweise eine Kommunikationsvorrichtung für die drahtlose Nachrichtenübertragung. Eine Kommunikationsvorrichtung für die drahtlose Nachrichtenübertragung kann eine oder mehrere Antennen, Verstärker, Filter, Mixer, Abtaster, Quantisierer, sowie Prozessoren für die digitale Signalverarbeitung umfassen.

Die erste Nachricht ist nicht notwendigerweise eine an das Datenverarbeitungssystem gerichtete Nachricht (einschließlich Multicast- und Broadcast-Nachrichten). Insbesondere kann die erste Nachricht eine Empfängeradresse aufweisen, die sich von der Adresse des Datenverarbeitungssystems bzw. der Kommunikationsvorrichtung unterscheidet. Insbesondere kann das Datenverarbeitungssystem in einem promiskuitiven Modus von der Kommunikationsvorrichtung empfangene Nachrichten analysieren, selbst wenn diese Nachrichten nicht für das Datenverarbeitungssystem bestimmt sind.

Die erste Senderadresse kann insbesondere auf der Grundlage eines Header-Abschnitts der ersten Nachricht bestimmt werden. Die erste Senderadresse kann beispielsweise eine physische Adresse und/oder eine Internet Protokoll-Adresse (IP-Adresse) umfassen. Die physische Adresse ist eine Geräteadresse und wird in unterschiedlichen technischen Systemen auch als Media-Access-Control Adresse (MAC-Adresse), Ethernet-ID, Airport-ID, Wi-Fi-Adresse oder physikalische Adresse bezeichnet. In der Folge wird die Bezeichnung MAC-Adresse als gleichbedeutend mit physischer Adresse verwendet.

Die erste Senderadresse kann sich von der entsprechenden Adresse des Senders der ersten Nachricht unterscheiden. Insbesondere kann der Sender der ersten Nachricht dazu ausgeführt sein, eine MAC-Adresse und/oder eine IP-Adresse vorzutäuschen, d.h. MAC-Spoofing und/oder IP-Spoofing durchzuführen. Somit kann der Sender der ersten Nachricht dazu ausgeführt sein, in der ersten Nachricht eine MAC-Adresse und/oder eine IP-Adresse als Senderadresse anzugeben, die sich von der tatsächlichen MAC-Adresse und/oder IP-Adresse des Senders der ersten Nachricht unterscheidet. Daher kann sich eine MAC-Senderadresse der ersten Nachricht von der MAC-Adresse des Senders der ersten Nachricht unterscheiden, und/oder eine IP-Senderadresse der ersten Nachricht kann sich von der IP-Adresse des Senders der ersten Nachricht unterscheiden.

Das Bestimmen, ob die erste Bedingung erfüllt ist, kann insbesondere folgendes umfassen: Es können eine oder mehrere erste vorkonfigurierte Senderadressen bestimmt werden. In der Folge wird zur Vereinfachung der Darstellung auf mehrere erste vorkonfigurierte Senderadressen abgestellt, d.h. es wird der Plural verwendet, ohne jedes Mal die Möglichkeit zu erwähnen, dass in einigen Ausführungsformen eine einzige erste vorkonfigurierte Senderadresse verwendet wird. Beispielsweise können die ersten vorkonfigurierten Senderadressen von dem Speicher der Datenverarbeitungsvorrichtung gelesen werden. Die erste Senderadresse kann sodann mit den ersten vorkonfigurierten Senderadressen verglichen werden. Die erste Bedingung kann erfüllt sein, wenn die erste Senderadresse mit einer der ersten vorkonfigurierten Senderadressen übereinstimmt. Somit kann das Datenverarbeitungssystem dazu ausgeführt sein, eine Adress-Filterung durchzuführen. In anderen Ausführungsformen kann die erste Bedingung andere Ausführungsformen der Adress-Filterung umfassen, wie sie aus dem Stand der Technik bekannt sind.

Die ersten vorkonfigurierten Senderadressen können beispielsweise bei der Herstellung der Leuchte auf dem Speicher des Datenverarbeitungssystems gespeichert werden. Bei der Herstellung der Leuchte können die MAC-Adressen und/oder IP-Adressen der Geräte, die zu einem späteren Zeitpunkt auf die Steuerung der Leuchte zugreifen können sollen, nicht bekannt sein. Daher können die ersten vorkonfigurierten Senderadressen beispielsweise zufällig generiert werden. Die ersten vorkonfigurierten Senderadressen können später auf ein Gerät kopiert werden, das auf die Steuerung der Leuchte zugreifen können soll. Dieses Gerät kann dazu ausgeführt sein, beim Senden einer ersten Nachricht eine der ersten vorkonfigurierten Senderadressen vorzutäuschen, beispielsweise mittels MAC-Spoofing und/oder IP-Spoofing, um Zugriff auf die Steuerung der Leuchte zu erhalten. Beispielsweise kann das zur Steuerung der Leuchte verwendete Gerät ein Smartphone sein, und der Hersteller der Leuchte kann einem Kunden ein Applikations-Programm (App) bereitstellen, wobei die App die ersten vorkonfigurierten Senderadressen umfassen kann, und/oder wobei die App Befehle umfasst, sodass das Gerät bei deren Ausführung eine der ersten vorkonfigurierten Senderadressen beim Senden der ersten Nachricht vortäuscht.

Das Datenverarbeitungssystem kann ferner dazu ausgeführt sein, eine Aktualisierung der ersten vorkonfigurierten Senderadressen zu unterstützen, beispielsweise durch ein Gerät nach einer erfolgreichen Authentifizierung wie unten beschrieben.

Wenn die erste Bedingung für die erste Senderadresse nicht erfüllt ist, verwirft das Datenverarbeitungssystem die erste Nachricht, ohne eine Nachricht in Reaktion auf die erste Nachricht zu senden. Insbesondere antwortet das Datenverarbeitungssystem nicht auf die erste Nachricht, wenn die erste Senderadresse die erste Bedingung nicht erfüllt. Das Datenverarbeitungssystem kann dazu ausgeführt sein, die Gegenwart und/oder Identität des Datenverarbeitungssystems vor anderen nachrichtentechnischen Geräten zu verbergen, solange nicht eine Nachricht empfangen wurde, deren Senderadresse die erste Bedingung erfüllt und optional die eine oder die mehreren weiteren Bedingungen erfüllt sind. Beispielsweise kann das Datenverarbeitungssystem dazu ausgeführt sein, keine Nachrichten zu versenden, die eine Identität des Datenverarbeitungssystems indizieren, solange nicht eine Nachricht empfangen wurde, deren Senderadresse die erste Bedingung erfüllt und optional die eine oder die mehreren weiteren Bedingungen erfüllt sind. Das Datenverarbeitungssystem kann auch dazu ausgeführt sein, keine Nachrichten mittels der Kommunikationsvorrichtung zu versenden, solange nicht eine Nachricht empfangen wurde, deren Senderadresse die erste Bedingung erfüllt und optional die eine oder die mehreren weiteren Bedingungen erfüllt sind.

Wenn die erste Bedingung für die erste Senderadresse erfüllt ist und optional die eine oder die mehreren weiteren Bedingungen erfüllt sind, wird eine zweite Nachricht in Reaktion auf die erste Nachricht gesendet. Dabei kann die zweite Nachricht beispielsweise eine an die erste Senderadresse gerichtete Nachricht sein. Alternativ kann die zweite Nachricht eine Broadcast-Nachricht sein. Das Format der zweiten Nachricht kann dem Format einer IEEE 802.11 Beacon-Nachricht oder dem Format einer IEEE 802.11 Probe Response Nachricht ähnlich sein. Nachdem bestimmt wurde, dass die erste Bedingung für die erste Senderadresse erfüllt ist und optional die eine oder die mehreren weiteren Bedingungen erfüllt sind, kann das Datenverarbeitungssystem konfiguriert sein, die Broadcast-Nachricht in periodischen Abständen wiederholt zu versenden.

Die zweite Nachricht kann Informationen umfassen, die eine Identität des Datenverarbeitungssystems indizieren. Insbesondere kann die zweite Nachricht eine physische Adresse und/oder eine IP-Adresse des Datenverarbeitungssystems umfassen. Ferner kann die zweite Nachricht Kontrollinformationen umfassen, insbesondere Kontrollinformationen, auf deren Grundlage der Sender der ersten Nachricht eine Kommunikationsverbindung mit dem Datenverarbeitungssystem aufbauen kann.

Das Verbergen der Präsenz und/oder Identität des Datenverarbeitungssystems solange nicht eine Nachricht empfangen wurde, deren Senderadresse die erste Bedingung erfüllt und optional die eine oder die mehreren weiteren Bedingungen erfüllt sind, kann einen unautorisierten Zugriff auf die Steuerung der Leuchte erschweren.

Gemäß einer Ausführungsform wechselt das Datenverarbeitungssystem in Reaktion darauf, dass die erste Bedingung für die erste Senderadresse erfüllt ist und optional die eine oder die mehreren weiteren Bedingungen erfüllt sind, von einem ersten Zustand in einen zweiten Zustand. Dabei ist das Datenverarbeitungssystem in dem ersten Zustand in einem Sniffer-Modus, und das Datenverarbeitungssystem sendet die zweite Nachricht in dem zweiten Zustand.

Somit kann das Datenverarbeitungssystem in dem ersten Zustand die folgenden Schritte ausführen: Empfangen der ersten Nachricht durch die Kommunikationsvorrichtung des Datenverarbeitungssystems; Bestimmen der ersten Senderadresse auf der Grundlage der ersten Nachricht; Bestimmen, ob die erste Bedingung für die erste Senderadresse erfüllt ist; und, wenn die erste Bedingung für die erste Senderadresse nicht erfüllt ist, Verwerfen der ersten Nachricht, ohne eine Nachricht in Reaktion auf die erste Nachricht zu senden.

Das Betreiben des Datenverarbeitungssystems in dem Sniffer-Modus kann bedeuten, dass das Datenverarbeitungssystem dazu ausgeführt ist, Nachrichten zu empfangen und zu analysieren, jedoch keine Nachrichten in Reaktion auf die analysierten Nachrichten zu senden. Ferner kann das Datenverarbeitungssystem in dem Sniffer-Modus dazu ausgeführt sein, keine Nachrichten zu versenden, die eine Identität des Datenverarbeitungssystems indizieren. Ferner kann das Datenverarbeitungssystem in dem Sniffer-Modus dazu ausgeführt sein, keine Nachrichten mittels der Kommunikationsvorrichtung zu versenden. Das Datenverarbeitungssystem kann somit in dem ersten Zustand dazu ausgeführt sein, für andere nachrichtentechnische Geräte unsichtbar zu sein.

Gemäß einer Ausführungsform ist das Datenverarbeitungssystem in dem ersten Zustand in einem promiskuitiven Modus.

Der promiskuitive Modus kann bedeuten, dass das Datenverarbeitungssystem von der Kommunikationsvorrichtung empfangenen Datenverkehr analysiert auch wenn dieser Datenverkehr nicht für das Datenverarbeitungssystem bestimmt ist. Daher ist die erste Nachricht nicht notwendigerweise eine an das Datenverarbeitungssystem gerichtete Nachricht (einschließlich Multicast- und Broadcast-Nachrichten). Insbesondere kann eine Empfängeradresse der ersten Nachricht verschieden sein von der entsprechenden Adresse des Datenverarbeitungssystems.

Alternativ kann das Datenverarbeitungssystem in dem ersten Zustand in einem nichtpromiskuitiven Modus betrieben werden, d.h. das Datenverarbeitungssystem kann dazu ausgeführt sein, in dem ersten Zustand Nachrichten nicht zu analysieren und zu verwerfen, wenn die Nachrichten nicht an das Datenverarbeitungssystem gerichtet sind. Somit kann das Datenverarbeitungssystem oder die Kommunikationsvorrichtung dazu ausgeführt sein, in dem ersten Zustand Nachrichten zu verwerfen, die nicht an das Datenverarbeitungssystem gerichtet sind. Insbesondere kann das Datenverarbeitungssystem in dem ersten Zustand eine Nachricht verwerfen, wenn deren Empfängeradresse nicht einer entsprechenden Adresse des Datenverarbeitungssystems entspricht.

Gemäß einer Ausführungsform umfasst die erste Senderadresse einen Abschnitt einer physischen Adresse und/oder einen Abschnitt einer Internet Protokoll-Adresse.

Die erste Nachricht umfasst vorzugsweise einen Header-Abschnitt, und der Header-Abschnitt kann eine physische Adresse und/oder eine IP-Adresse umfassen.

Die erste Senderadresse kann eine vollständige physische Adresse oder einen Abschnitt einer physischen Adresse umfassen. Beispielsweise kann eine physische Adresse insgesamt 48 Bit umfassen, und die erste Senderadresse kann einen Teil dieser 48 Bit umfassen. Beispielsweise kann die erste Senderadresse die ersten 40 Bit der physischen Senderadresse umfassen. Somit können 40 Bit der physischen Senderadresse für die Adress-Filterung verwendet werden, und die letzten 8 Bit können verwendet werden, um mehrere auf die Steuerung der Leuchte zugreifende Geräte zu unterscheiden. Ferner kann die erste Senderadresse eine vollständige IP-Adresse oder einen Abschnitt einer IP-Adresse umfassen.

Wie oben bereits erläutert kann die erste Nachrichte eine MAC-Senderadresse und/oder eine IP-Adresse umfassen, die sich von der MAC-Adresse und/oder der IP-Adresse des Senders der ersten Nachricht unterscheidet. Insbesondere kann der Sender der ersten Nachricht dazu ausgeführt sein, eine MAC-Adresse und/oder eine IP-Adresse vorzutäuschen, sodass die Empfängeradresse der ersten Nachricht die erste Bedingung erfüllt.

Gemäß dem ersten Aspekt der Erfindung umfasst das Verfahren ferner das Berechnen eines Passworts in Abhängigkeit von der ersten Senderadresse.

Dabei wird der Algorithmus zur Berechnung des Passworts in Abhängigkeit von der ersten Senderadresse vorzugsweise nicht veröffentlicht, sodass Angreifer auch bei Kenntnis der ersten Nachricht oder der ersten Senderadresse das Passwort nicht berechnen können.

Der Hersteller der Leuchte kann beispielsweise Kunden eine Software bereitstellen, mittels derer Geräte, die auf die Steuerung der Leuchte zugreifen können sollen, das Passwort zu der ersten Senderadresse bestimmen können. Beispielsweise kann die Software dazu ausgeführt sein, über eine geschützte Kommunikationsverbindung das Passwort von einem Server zu erfragen und zu empfangen. Dabei kann der Server dazu ausgeführt sein, dass Passwort in Abhängigkeit von der ersten Senderadresse zu berechnen. Alternativ kann die den Kunden bereitgestellte Software dazu ausgeführt sein, in einem geschützten Modus das Passwort in Abhängigkeit von der ersten Senderadresse zu berechnen. Es ist auch möglich, dass die den Kunden bereitgestellte Software die in Abhängigkeit von den ersten vorkonfigurierten Senderadressen berechneten Passwörter umfasst. Die Software kann beispielsweise eine App für ein Smartphone sein.

Gemäß einer weiteren Ausführungsform berechnet das Datenverarbeitungssystem das Passwort zusätzlich in Abhängigkeit von einer Zeit und/oder einem Datum.

Der Algorithmus zur Berechnung des Passworts in Abhängigkeit von der ersten Senderadresse sowie in Abhängigkeit von der Zeit und/oder dem Datum wird vorzugsweise nicht veröffentlicht, sodass Angreifer auch bei Kenntnis der ersten Senderadresse sowie der Zeit und/oder dem Datum das Passwort nicht berechnen können.

Der Hersteller der Leuchte kann beispielsweise Kunden eine Software bereitstellen, mittels derer Geräte, die auf die Steuerung der Leuchte zugreifen können sollen, das Passwort zu der ersten Senderadresse sowie der Zeit und/oder dem Datum bestimmen können. Beispielsweise kann die Software dazu ausgeführt sein, über eine geschützte Kommunikationsverbindung das Passwort von einem Server zu erfragen und zu empfangen. Dabei kann der Server dazu ausgeführt sein, dass Passwort in Abhängigkeit von der ersten Senderadresse sowie der Zeit und/oder dem Datum zu berechnen. Alternativ kann die den Kunden bereitgestellte Software dazu ausgeführt sein, in einem geschützten Modus das Passwort in Abhängigkeit von der ersten Senderadresse sowie der Zeit und/oder dem Datum zu berechnen. Die Software kann beispielsweise eine App für ein Smartphone sein.

Die Abhängigkeit des Passworts von der Zeit und/oder dem Datum kann den Vorteil haben, dass ein Passwort nur für einen Zugriff Gültigkeit besitzt. Somit kann das berechnete Passwort ein Einmalpasswort sein, d.h. das Passwort kann nur für einen einzigen Zugriff auf die Steuerung der Leuchte Gültigkeit besitzen. Selbst wenn es einem Angreifer gelungen ist, das für einen ersten Zugriff auf die Steuerung der Leuchte verwendete Passwort zu ermitteln, so kann dieses Passwort nicht für einen zweiten Zugriff auf die Steuerung der Leuchte verwendet werden, d.h. ein unerlaubter Zugriff auf die Steuerung der Leuchte wird erschwert.

Vorzugsweise wird das Passwort berechnet, nachdem bestimmt wurde, dass die erste Bedingung für die erste Senderadresse erfüllt ist und optional die eine oder mehreren weiteren Bedingungen erfüllt sind.

Das Passwort kann auch in Abhängigkeit von weiteren Parametern berechnet werden, beispielsweise einem Offset, der von dem Datenverarbeitungssystem und einem auf die Steuerung der Leuchte zugreifenden Gerät bei jedem Zugriff inkrementiert oder anderweitig geändert wird, und nicht zwischen dem Datenverarbeitungssystem und dem auf die Steuerung der Leuchte zugreifenden Gerät übertragen wird.

Gemäß einer weiteren Ausführungsform umfasst das Verfahren das Empfangen einer dritten Nachricht mittels der Kommunikationsvorrichtung, wobei die dritte Nachricht die Zeit und/oder das Datum umfasst.

Insbesondere kann der Sender der ersten Nachricht auch die dritte Nachricht senden. Ferner kann die dritte Nachricht die erste Senderadresse umfassen, und das Datenverarbeitungssystem kann dazu ausgeführt sein, auf der Grundlage der Senderadresse der ersten und der dritten Nachricht zu bestimmen, dass die dritte Nachricht von dem Sender der ersten Nachricht gesendet wurde. Es ist auch möglich, dass die erste Nachricht und die dritte Nachricht identisch sind.

Ferner kann das Datenverarbeitungssystem die Zeit und/oder das Datum auf der Grundlage der dritten Nachricht bestimmen, sodass erreicht werden kann, dass das Datenverarbeitungssystem der Leuchte und der Sender der ersten Nachricht dieselbe Zeit und/oder dasselbe Datum verwenden, um das Passwort zu bestimmen.

Das Datenverarbeitungssystem kann dazu ausgeführt sein, die in erfolgreichen Zugriffen auf die Steuerung der Leuchte verwendeten Senderadressen sowie Zeiten und/oder Daten zu speichern und einen zweiten Zugriff mit einer bereits früher verwendeten Kombination von Senderadresse sowie Zeit und/oder Datum abzulehnen.

Gemäß dem ersten Aspekt der Erfindung umfasst das Verfahren ferner das Authentifizieren des Senders der ersten Nachricht auf der Grundlage des berechneten Passworts, und das Erlauben eines Zugriffs auf die Steuerung der Leuchte durch den Sender der ersten Nachricht, wenn der Sender der ersten Nachricht erfolgreich authentifiziert wurde.

Diese Verfahrensschritte werden vorzugsweise ausgeführt, nachdem bestimmt wurde, dass die erste Bedingung für die erste Senderadresse erfüllt ist und optional die eine oder mehreren weiteren Bedingungen erfüllt sind.

Beispielsweise kann eine Challenge-Response-Authentifizierung verwendet werden, um den Sender der ersten Nachricht auf der Grundlage des berechneten Passworts zu identifizieren. So kann das Datenverarbeitungssystem beispielsweise ein Nonce an den Sender der ersten Nachricht senden. Der Sender der ersten Nachricht kann das empfangene Nonce mittels des von dem Sender der ersten Nachricht bestimmten Passworts chiffrieren und das chiffrierte Nonce an das Datenverarbeitungssystem zurücksenden. Daraufhin kann das Datenverarbeitungssystem das empfangene chiffrierte Nonce auf der Grundlage des Passworts dechiffrieren, das von dem Datenverarbeitungssystem berechnet wurde. Stimmen das Ergebnis und das ursprünglich von dem Datenverarbeitungssystem gesendete Nonce überein, so kann das Datenverarbeitungssystem bestimmen, dass der Sender der ersten Nachricht erfolgreich authentifiziert wurde.

Alternativ kann ein Nonce auch von dem Sender der ersten Nachricht an das Datenverarbeitungssystem gesendet werden. Das Datenverarbeitungssystem kann dazu ausgeführt sein, das von dem Sender der ersten Nachricht empfangene Nonce mittels des von dem Datenverarbeitungssystem berechneten Passworts zu chiffrieren und das chiffrierte Nonce an den Sender der ersten Nachricht zurücksenden. Der Sender der ersten Nachricht kann dann das empfangene chiffrierte Nonce auf der Grundlage des von ihm bestimmten Passworts verifizieren. Zahlreiche andere Ausführungsformen von Challenge-Response-Authentifizierungen sind aus dem Stand der Technik bekannt und können verwendet werden, um den Sender der ersten Nachricht auf der Grundlage des Passworts zu authentifizieren.

Das Erlauben des Zugriffs auf die Steuerung der Leuchte nach einer erfolgreichen Authentifizierung des Senders der ersten Nachricht durch das Datenverarbeitungssystem kann insbesondere bedeuten, dass der Sender der ersten Nachricht Steuerungsparameter der Leuchte ändern kann.

Gemäß einer weiteren Ausführungsform sendet das Datenverarbeitungssystem die zweite Nachricht in Reaktion auf die erste Nachricht, wenn die erste Bedingung für die erste Senderadresse erfüllt ist und zusätzlich eine zweite Bedingung erfüllt ist und optional eine oder mehrere weitere Bedingungen erfüllt sind. Dabei umfasst das Verfahren das Empfangen eines Signals, wobei das Signal eine Spannung innerhalb eines Leuchtmittelkörpers der Leuchte indiziert, und das Datenverarbeitungssystem bestimmt in Abhängigkeit von der Spannung innerhalb des Leuchtmittelkörpers, ob die zweite Bedingung erfüllt ist.

Somit kann das Datenverarbeitungssystem dazu ausgeführt sein, die zweite Nachricht in Reaktion auf die erste Nachricht nur zu senden, wenn die erste Bedingung für die erste Senderadresse erfüllt ist und zusätzlich die zweite Bedingung erfüllt ist und optional eine oder mehrere weitere Bedingungen erfüllt sind. Somit kann das Datenverarbeitungssystem dazu ausgeführt sein, die erste Nachricht zu verwerfen ohne eine Nachricht in Reaktion auf die erste Nachricht zu senden, wenn die erste Bedingung für die erste Senderadresse nicht erfüllt ist und/oder wenn die zweite Bedingung nicht erfüllt ist und/oder wenn eine optionale weitere Bedingung nicht erfüllt ist.

Beispielsweise kann die zweite Bedingung erfüllt sein, wenn die Spannung innerhalb des Leuchtmittelkörpers größer ist als ein Schwellwert. Ein Zugriff auf die Steuerung der Leuchte kann somit von dem Datenverarbeitungssystem verwehrt werden, wenn das von dem Datenverarbeitungssystem empfangene Signal indiziert, dass die Spannung innerhalb des Leuchtmittelkörpers kleiner als der Schwellwert ist. Dadurch kann vermieden werden, dass auf die Steuerung der Leuchte zugegriffen wird, während die Leuchte ausgeschaltet ist, d.h. die Spannung innerhalb des Leuchtmittelkörpers kleiner als der Schwellwert ist.

In einer anderen Ausführungsform kann das Datenverarbeitungssystem dazu ausgeführt sein zu bestimmen, dass die zweite Bedingung erfüllt ist, wenn das von dem Datenverarbeitungssystem empfangene Signal indiziert, dass sich die Spannung in dem Leuchtmittelkörper innerhalb einer vierten Zeitspanne von einem ersten Spannungswert auf einen zweiten Spannungswert änderte. Die vierte Zeitspanne kann beispielsweise die unmittelbar vorausgehenden 5 Sekunden, 10 Sekunden, 30 Sekunden oder 60 Sekunden umfassen. Beispielsweise kann die zweite Bedingung erfüllt sein, wenn das von dem Datenverarbeitungssystem empfangene Signal indiziert, dass die Spannung innerhalb des Leuchtmittelkörpers während der vierten Zeitspanne von einem ersten Spannungswert auf einen zweiten Spannungswert gestiegen ist. Insbesondere kann bestimmt werden, dass die zweite Bedingung erfüllt ist, wenn das von dem Datenverarbeitungssystem empfangene Signal indiziert, dass die Leuchte während der vierten Zeitspanne eingeschaltet wurde. Alternativ oder in Ergänzung dazu kann die zweite Bedingung erfüllt sein, wenn das von dem Datenverarbeitungssystem empfangene Signal indiziert, dass die Spannung innerhalb des Leuchtmittelkörpers während der vierten Zeitspanne von dem zweiten Spannungswert auf den ersten Spannungswert gefallen ist. Somit kann bestimmt werden, dass die zweite Bedingung erfüllt ist, wenn das von dem Datenverarbeitungssystem empfangene Signal indiziert, dass die Leuchte während der vierten Zeitspanne ausgeschaltet wurde.

Gemäß einer weiteren Ausführungsform kann das Verfahren ferner das Deaktivieren des Empfangens von Nachrichten nach Ablauf einer ersten Zeitspanne und/oder das Aktivieren des Empfangens von Nachrichten nach Ablauf einer zweiten Zeitspanne umfassen.

Somit kann das Datenverarbeitungssystem dazu ausgeführt sein, das Empfangen von Nachrichten für die erste Zeitspanne zu aktivieren und/oder das Empfangen von Nachrichten für die zweite Zeitspanne zu deaktivieren.

Das Datenverarbeitungssystem kann neben dem oben erläuterten ersten Zustand einen dritten Zustand umfassen. Wie oben erläutert kann das Datenverarbeitungssystem in dem ersten Zustand in einem Sniffer-Modus sein, wobei das Empfangen von Nachrichten aktiviert ist. In dem dritten Zustand kann das Empfangen von Nachrichten deaktiviert sein. Insbesondere kann die Kommunikationsvorrichtung des Datenverarbeitungssystems in dem dritten Zustand deaktiviert sein. Das Datenverarbeitungssystem kann dazu ausgeführt sein, nach Ablauf der ersten Zeitspanne von dem ersten Zustand in den dritten Zustand zu wechseln. Ferner kann das Datenverarbeitungssystem dazu ausgeführt sein, nach Ablauf der zweiten Zeitspanne von dem dritten Zustand in den ersten Zustand zu wechseln.

Das Datenverarbeitungssystem kann dazu ausgeführt sein, periodisch zwischen dem ersten und dem dritten Zustand zu wechseln, solange in dem ersten Zustand keine Nachricht empfangen wurde, deren Senderadresse die erste Bedingung erfüllt und optional die eine oder die mehreren weiteren Bedingungen erfüllt sind. Die erste Zeitspanne kann beispielsweise 0,05 Sekunden, 0,1 Sekunde, 0,2 Sekunden, 0,5 Sekunden, 1 Sekunde oder 2 Sekunden lang sein. Die zweite Zeitspanne kann beispielsweise 0,5 Sekunden, 1 Sekunde, 2 Sekunden, 5 Sekunden oder 10 Sekunden lang sein. Die zweite Zeitspanne kann beispielsweise zweimal, fünfmal, zehnmal oder zwanzigmal länger sein als die erste Zeitspanne.

Ferner müssen die erste Zeitspanne und die zweite Zeitspanne nicht konstant sein. Beispielsweise kann die erste Zeitspanne mit jedem Wechsel in den ersten Zustand zufällig aus einem ersten Wertebereich gewählt werden, und/oder die zweite Zeitspanne kann mit jedem Wechsel in den dritten Zustand zufällig aus einem zweiten Wertebereich gewählt werden.

Das Deaktivieren des Empfangens von Nachrichten für die zweite Zeitspanne kann einen Zugriff auf die Steuerung der Leuchte zusätzlich erschweren. Um Zugriff auf die Steuerung der Leuchte zu gewähren, kann beispielsweise der Hersteller der Leuchte Kunden eine Software bereitstellen, sodass ein die Software ausführendes Gerät eine Nachricht mit einer zulässigen Senderadresse wiederholt aussendet, und zwar über einen Zeitraum hinweg, der länger als die zweite Zeitspanne ist, um sicherzustellen, dass die gesendete Nachricht von dem Datenverarbeitungssystem der Leuchte empfangen wird.

Gemäß einer weiteren Ausführungsform sendet das Datenverarbeitungssystem die zweite Nachricht in Reaktion auf die erste Nachricht, wenn die erste Bedingung für die erste Senderadresse erfüllt ist und eine dritte Bedingung erfüllt ist und eine oder mehrere weitere Bedingungen erfüllt sind, wobei die dritte Bedingung erfüllt ist, wenn die erste Nachricht innerhalb einer dritten Zeitspanne nach dem Empfangen einer vierten Nachricht empfangen wurde, die vierte Nachricht eine zweite Senderadresse umfasst, und die zweite Senderadresse eine vierte Bedingung erfüllt; wobei die erste Senderadresse und die zweite Senderadresse verschieden sind.

Somit kann das Datenverarbeitungssystem dazu ausgeführt sein, die zweite Nachricht in Reaktion auf die erste Nachricht nur zu senden, wenn die erste Bedingung für die erste Senderadresse erfüllt ist und zusätzlich die dritte Bedingung erfüllt ist und optional eine oder mehrere weitere Bedingungen erfüllt sind. Andererseits kann das Datenverarbeitungssystem dazu ausgeführt sein, die erste Nachricht zu verwerfen ohne eine Nachricht in Reaktion auf die erste Nachricht zu senden, wenn die erste Bedingung für die erste Senderadresse nicht erfüllt ist und/oder die dritte Bedingung nicht erfüllt ist.

Alternativ kann das Datenverarbeitungssystem dazu ausgeführt sein, die zweite Nachricht in Reaktion auf die erste Nachricht nur zu senden, wenn die erste Bedingung für die erste Senderadresse erfüllt ist und zusätzlich die zweite und die dritte Bedingung erfüllt sind und optional eine oder mehrere weitere Bedingungen erfüllt sind. Andererseits kann das Datenverarbeitungssystem dazu ausgeführt sein, die erste Nachricht zu verwerfen ohne eine Nachricht in Reaktion auf die erste Nachricht zu senden, wenn die erste Bedingung für die erste Senderadresse nicht erfüllt ist und/oder wenn die zweite Bedingung nicht erfüllt ist und/oder wenn die dritte Bedingung nicht erfüllt ist.

Die dritte Bedingung umfasst eine vierte Bedingung, und die vierte Bedingung kann eine Adress-Filterung umfassen, wobei sich die Adress-Filterung der vierten Bedingung von der Adress-Filterung der ersten Bedingung unterscheiden kann. Insbesondere kann das Datenverarbeitungssystem dazu ausgeführt sein, die zweite Senderadresse auf der Grundlage der vierten Nachricht zu bestimmen, eine oder mehrere zweite vorkonfigurierte Senderadressen zu bestimmen und die zweite Senderadresse mit der einen oder den mehreren zweiten vorkonfigurierten Senderadressen zu vergleichen.

In der Folge wird wiederum zur Vereinfachung der Darstellung auf mehrere zweite vorkonfigurierte Senderadressen abgestellt, d.h. es wird der Plural verwendet, ohne die Möglichkeit zu erwähnen, dass in einigen Ausführungsformen eine einzige zweite vorkonfigurierte Senderadresse verwendet wird. Die vierte Bedingung kann erfüllt sein, wenn die zweite Senderadresse mit einer der zweiten vorkonfigurierten Senderadressen übereinstimmt.

Die zweiten vorkonfigurierten Senderadressen können sich von den ersten vorkonfigurierten Senderadressen unterscheiden. Die zweiten vorkonfigurierten Senderadressen können bestimmt werden, indem sie von dem Speicher der Datenverarbeitungsvorrichtung gelesen werden. Die zweiten vorkonfigurierten Senderadressen können beispielsweise bei der Herstellung der Leuchte auf dem Speicher des Datenverarbeitungssystems gespeichert werden. Bei der Herstellung der Leuchte können die MAC-Adressen und/oder IP-Adressen der Geräte, die zu einem späteren Zeitpunkt auf die Steuerung der Leuchte zugreifen können sollen, nicht bekannt sein. Daher können die zweiten vorkonfigurierten Senderadressen beispielsweise zufällig generiert werden. Die zweiten vorkonfigurierten Senderadressen können später auf ein Gerät kopiert werden, das auf die Steuerung der Leuchte zugreifen können soll. Dieses Gerät kann beispielsweise eine MAC-Adresse und/oder eine IP-Adresse vortäuschen, um auf die Steuerung der Leuchte zugreifen zu können. Das zur Steuerung der Leuchte verwendete Gerät kann beispielsweise ein Smartphone sein, und der Hersteller der Leuchte kann einem Kunden eine App bereitstellen, wobei die App die zweiten vorkonfigurierten Senderadressen umfasst.

Die dritte Zeitspanne kann in Abhängigkeit von der zweiten Senderadresse bestimmt werden. Insbesondere kann das Datenverarbeitungssystem dazu ausgeführt sein, die vierte Nachricht zu empfangen, die zweite Senderadresse auf der Grundlage der vierten Nachricht zu bestimmen, und ferner zu bestimmen, ob die vierte Bedingung für die zweite Senderadresse erfüllt ist. Das Datenverarbeitungssystem kann ferner dazu ausgeführt sein, die dritte Zeitspanne in Abhängigkeit von der zweiten Senderadresse zu bestimmen, wenn die vierte Bedingung für die zweite Senderadresse erfüllt ist. Ferner kann das Datenverarbeitungssystem dazu ausgeführt sein, keine Nachricht in Reaktion auf die vierte Nachricht zu senden, auch wenn die vierte Bedingung für die zweite Senderadresse erfüllt ist. Ferner kann das Datenverarbeitungssystem dazu ausgeführt sein zu bestimmen, dass die dritte Bedingung erfüllt ist, wenn die erste Nachricht innerhalb der dritten Zeitspanne empfangen wurde.

Da das Datenverarbeitungssystem keine Nachricht in Reaktion auf die vierte Nachricht sendet, ist es für einen Angreifer nicht unmittelbar erkennbar, dass die vierte Nachricht und das Empfangen der ersten Nachricht innerhalb der dritten Zeitspanne relativ zu dem Empfangen der vierten Nachricht für den Zugriff auf die Steuerung der Leuchte erforderlich sind. Dies kann einen unerlaubten Zugriff auf die Steuerung der Leuchte erschweren.

Ein zweiter Aspekt der Erfindung betrifft ein Datenverarbeitungssystem umfassend eine Kommunikationsvorrichtung, wobei das Datenverarbeitungssystem dazu ausgeführt ist, das Verfahren gemäß dem ersten Aspekt der Erfindung oder einer der genannten Ausführungsformen auszuführen.

Ein dritter Aspekt der Erfindung betrifft eine Leuchte umfassend ein Datenverarbeitungssystem gemäß dem zweiten Aspekt der Erfindung.

Ein vierter Aspekt der Erfindung betrifft ein Computerprogramm umfassend Befehle, die bewirken, dass das Datenverarbeitungssystem gemäß dem zweiten Aspekt der Erfindung das Verfahren gemäß dem ersten Aspekt der Erfindung oder einer der genannten Ausführungsformen ausführt.

Ein fünfter Aspekt der Erfindung betrifft ein computerlesbares Medium, auf dem das Computerprogramm gemäß dem vierten Aspekt der Erfindung gespeichert ist.

Ein sechster Aspekt der Erfindung betrifft ein Verfahren zur Erlangung eines Zugriffs auf eine Steuerung einer Leuchte, wobei das Verfahren von einem Datenverarbeitungssystem mit einer Kommunikationsvorrichtung ausgeführt wird. Das Verfahren umfasst das Bestimmen einer ersten vorkonfigurierten Senderadresse und das Senden einer ersten Nachricht mittels der Kommunikationsvorrichtung, wobei die erste Nachricht die erste vorkonfigurierte Senderadresse umfasst, und wobei die erste vorkonfigurierte Senderadresse mit einer Adresse des Datenverarbeitungssystems nicht übereinstimmt.

Somit täuscht das Datenverarbeitungssystem beim Senden der ersten Nachricht die erste vorkonfigurierte Senderadresse als Senderadresse vor. Insbesondere kann das Datenverarbeitungssystem MAC-Spoofing und/oder IP-Spoofing durchführen, um die erste vorkonfigurierte Senderadresse vorzutäuschen.

Gemäß einer Ausführungsform umfasst die erste Senderadresse einen Abschnitt einer physischen Adresse und/oder einen Abschnitt einer Internet Protokoll-Adresse.

Gemäß dem sechsten Aspekt der Erfindung umfasst das Verfahren ferner das Bestimmen eines Passworts in Abhängigkeit von der ersten Senderadresse.

Gemäß einer weiteren Ausführungsform wird das Passwort zusätzlich in Abhängigkeit von einer Zeit und/oder einem Datum bestimmt.

Gemäß einer weiteren Ausführungsform umfasst das Verfahren ferner das Senden der dritten Nachricht, wobei die dritte Nachricht die Zeit und/oder das Datum umfasst.

Gemäß einer weiteren Ausführungsform umfasst das Verfahren das Senden der ersten Nachricht mehrfach hintereinander.

Gemäß einer weiteren Ausführungsform umfasst das Verfahren vor dem Senden der ersten Nachricht ferner das Bestimmen einer zweiten vorkonfigurierten Senderadresse, wobei die zweite vorkonfigurierte Senderadresse sich von der ersten vorkonfigurierten Senderadresse unterscheidet. Ferner umfasst das Verfahren das Senden einer vierten Nachricht mittels der Kommunikationsvorrichtung, wobei die vierte Nachricht die zweite vorkonfigurierte Senderadresse umfasst; und wobei die zweite vorkonfigurierte Senderadresse vorgetäuscht wird. Ferner umfasst das Verfahren das Bestimmen einer dritten Zeitspanne in Abhängigkeit von der zweiten vorkonfigurierten Senderadresse. In dieser Ausführungsform erfolgt das Senden der ersten Nachricht innerhalb der dritten Zeitspanne.

Ein siebter Aspekt der Erfindung betrifft ein Datenverarbeitungssystem umfassend eine Kommunikationsvorrichtung, wobei das Datenverarbeitungssystem dazu ausgeführt ist, ein Verfahren gemäß dem sechsten Aspekt der Erfindung oder einer der genannten Ausführungsformen auszuführen.

Ein achter Aspekt der Erfindung betrifft ein Computerprogramm umfassend Befehle, die bewirken, dass das Datenverarbeitungssystem gemäß dem siebten Aspekt der Erfindung das Verfahren gemäß dem sechsten Aspekt der Erfindung oder einer der genannten Ausführungsformen ausführt.

Ein neunter Aspekt der Erfindung betrifft ein computerlesbares Medium, auf dem das Computerprogramm gemäß dem achten Aspekt der Erfindung gespeichert ist.

Es sei darauf hingewiesen, dass die erfindungsgemäßen Verfahren, Datenverarbeitungssysteme, Computerprogramme und computerlesbare Speichermedien ähnliche oder identische bevorzugte Ausführungsformen aufweisen.

Ferner sei darauf hingewiesen, dass die Verfahren des ersten und des sechsten Aspekts der Erfindung sowie die genannten Ausführungsformen in ähnlicher Weise angewandt werden können, um den Zugriff auf eine Steuerung eines anderen technischen Systems, beispielsweise eines Haushaltsgeräts oder einer Maschine zu kontrollieren oder zu erlangen.

Im Folgenden werden Ausführungsbeispiele der Erfindung unter Bezugnahme auf die Figuren beschrieben. Darin bezeichnen gleiche Bezugszeichen gleiche oder ähnliche Elemente. Gleiche oder ähnliche Elemente können aber auch durch unterschiedliche Bezugszeichen bezeichnet sein.

### Kurze Beschreibung der Figuren

Figur 1 veranschaulicht eine Leuchte gemäß einem Ausführungsbeispiel der Erfindung.
Figur 2 veranschaulicht ein Verfahren zur Kontrolle eines Zugriffs auf eine Steuerung einer Leuchte gemäß einem Ausführungsbeispiel der Erfindung.
Figur 3 veranschaulicht ein Zustandsübergangsdiagramm für ein Datenverarbeitungssystem gemäß einem Ausführungsbeispiel der Erfindung.

### Detaillierte Beschreibung von Ausführungsbeispielen

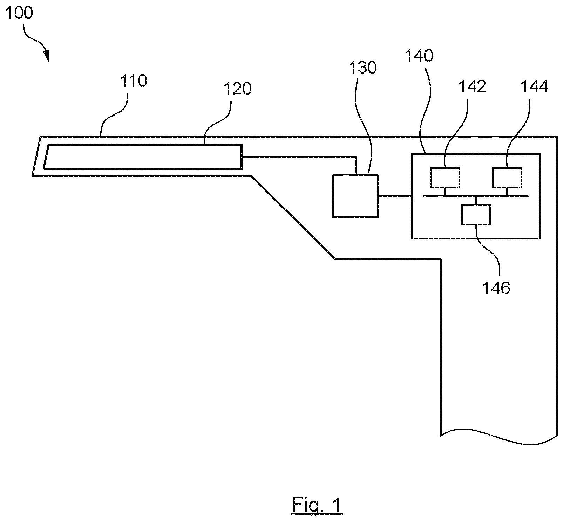

Figur 1 veranschaulicht eine Leuchte 100 gemäß einem Ausführungsbeispiel der Erfindung. Die Leuchte 100 kann eine Innenleuchte oder eine Außenleuchte sein. Die Leuchte 100 kann ein Gehäuse 110 umfassen. Ferner umfasst die Leuchte 100 einen Leuchtmittelkörper 120, wobei der Leuchtmittelkörper eine oder mehrere Leuchtmittel umfassen kann. Der Leuchtmittelkörper 120 kann zur Aufnahme von Leuchtmitteln ausgeführt sein, die Leuchte 100 umfasst jedoch nicht notwendigerweise ein Leuchtmittel. Bei den Leuchtmitteln kann es sich beispielsweise um Leuchtdioden, Gasentladungslampen oder Glühlampen handeln.

Der Leuchtmittelkörper 120 kann mit einem Netzgerät 130 verbunden sein, und das Netzgerät 130 kann mit einem Datenverarbeitungssystem 140 verbunden sein. Das Datenverarbeitungssystem 140 kann dazu ausgeführt sein, eine Steuerung der Leuchte 100 auszuführen. Beispielsweise kann das Datenverarbeitungssystem dazu ausgeführt sein, einen von der Leuchte erzeugten Lichtstrom zu steuern und/oder eine Lichtverteilungskurve der Leuchte zu steuern. In anderen Ausführungsformen kann die Leuchte eine von dem Datenverarbeitungssystem separate Vorrichtung zur Steuerung der Leuchte aufweisen.

Das Datenverarbeitungssystem 140 umfasst einen Prozessor 142, einen Speicher 144 und eine Kommunikationsvorrichtung 146. Die Kommunikationsvorrichtung ist vorzugsweise eine Kommunikationsvorrichtung für die drahtlose Nachrichtenübertragung.

Das Datenverarbeitungssystem 140 ist dazu ausgeführt, den Zugriff auf die Steuerung der Leuchte zu kontrollieren. Insbesondere ist das Datenverarbeitungssystem 140 dazu ausgeführt, eine erste Nachricht mittels der Kommunikationsvorrichtung 146 zu empfangen, eine erste Senderadresse auf der Grundlage der ersten Nachricht zu bestimmen, und in Abhängigkeit von der ersten Senderadresse zu bestimmen, ob eine erste Bedingung erfüllt ist. Ferner ist das Datenverarbeitungssystem 140 dazu ausgeführt, die erste Nachricht zu verwerfen, ohne eine Nachricht in Reaktion auf die erste Nachricht zu senden, wenn die erste Bedingung für die erste Senderadresse nicht erfüllt ist. Ferner ist das Datenverarbeitungssystem 140 dazu ausgeführt, eine zweite Nachricht in Reaktion auf die erste Nachricht zu senden, wenn die erste Bedingung für die erste Senderadresse erfüllt ist und optional eine oder mehrere weitere Bedingungen erfüllt sind.

Die erste Nachricht ist nicht notwendigerweise eine an das Datenverarbeitungssystem 140 gerichtete Nachricht. Insbesondere kann das Datenverarbeitungssystem 140 in einem promiskuitiven Modus dazu ausgeführt sein, von der Kommunikationsvorrichtung 146 empfangene Nachrichten zu analysieren auch wenn diese Nachrichten nicht an das Datenverarbeitungssystem 140 adressiert sind.

Die erste Senderadresse kann beispielsweise eine physische Adresse und/oder eine IP-Adresse umfassen. Die erste Senderadresse kann sich von der entsprechenden Adresse des Senders der ersten Nachricht unterscheiden. Insbesondere kann der Sender der ersten Nachricht dazu ausgeführt sein, eine MAC-Adresse und/oder eine IP-Adresse vorzutäuschen, d.h. MAC-Spoofing und/oder IP-Spoofing durchzuführen.

Die erste Bedingung kann eine erste Adress-Filterung umfassen. Dabei kann das Datenverarbeitungssystem die erste Senderadresse mit ersten vorkonfigurierten Senderadressen vergleichen.

Das Datenverarbeitungssystem 140 kann dazu ausgeführt sein, sein Vorhandensein und/oder seine Identität vor anderen nachrichtentechnischen Geräten zu verbergen, solange nicht eine Nachricht empfangen wurde, deren Senderadresse die erste Bedingung erfüllt und optional die eine oder die mehreren weiteren Bedingungen erfüllt sind. Beispielsweise kann das Datenverarbeitungssystem 140 dazu ausgeführt sein, keine Nachrichten zu versenden, deren Inhalt eine Identität des Datenverarbeitungssystems indizieren, solange nicht eine Nachricht empfangen wurde, deren Senderadresse die erste Bedingung erfüllt und optional die eine oder die mehreren weiteren Bedingungen erfüllt sind. Das Datenverarbeitungssystem 140 kann auch dazu ausgeführt sein, keine Nachrichten mittels der Kommunikationsvorrichtung 146 zu versenden, solange nicht eine Nachricht empfangen wurde, deren Senderadresse die erste Bedingung erfüllt und optional die eine oder mehreren weiteren Bedingungen erfüllt sind.

Die zweite Nachricht kann beispielsweise eine an die erste Senderadresse gerichtete Nachricht oder eine Broadcast-Nachricht sein. Mit dem Senden der zweiten Nachricht kann das Datenverarbeitungssystems 140 für andere Geräte mit entsprechenden Kommunikationsvorrichtungen sichtbar werden. Die zweite Nachricht kann Kontrollinformationen umfassen, insbesondere Kontrollinformationen, die für den Aufbau einer Kommunikationsverbindung mit dem Datenverarbeitungssystem 140 relevant sind.

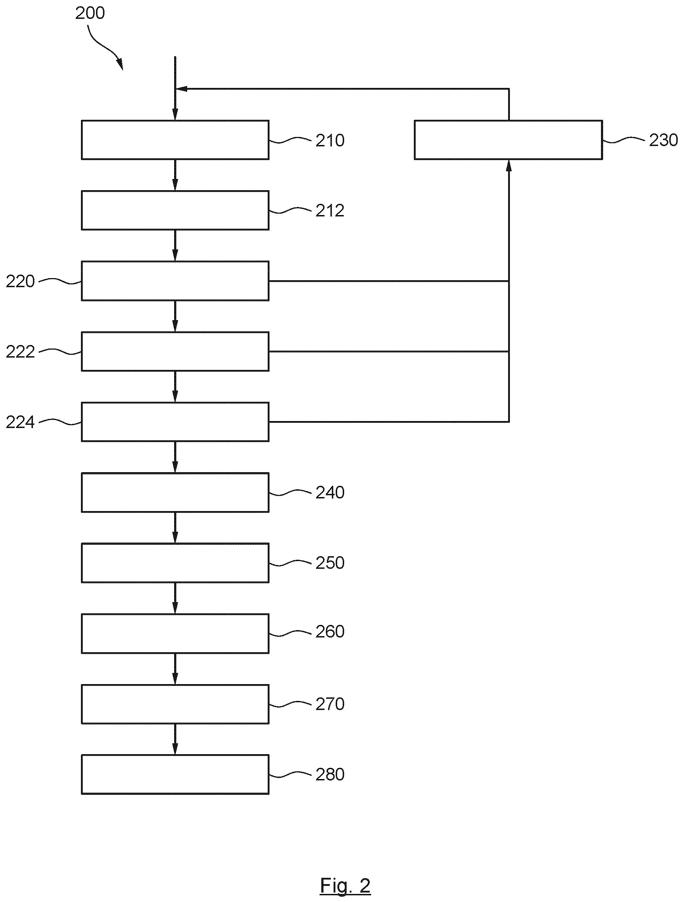

Figur 2 veranschaulicht ein Verfahren 200 zur Kontrolle eines Zugriffs auf eine Steuerung einer Leuchte 100 gemäß einem Ausführungsbeispiel der Erfindung.

In 210 empfängt das Datenverarbeitungssystem 140 die erste Nachricht mittels der Kommunikationsvorrichtung 146.

In 212 bestimmt das Datenverarbeitungssystem 140 die erste Senderadresse auf der Grundlage der ersten Nachricht.

In 220 bestimmt das Datenverarbeitungssystem 140 in Abhängigkeit von der ersten Senderadresse, ob die erste Bedingung erfüllt ist. Dabei wird eine erste Adress-Filterung durchgeführt.

Wenn die erste Bedingung für die erste Senderadresse nicht erfüllt ist, verwirft das Datenverarbeitungssystem 140 in 230 die erste Nachricht, ohne eine Nachricht in Reaktion auf die erste Nachricht zu senden. Nach dem Verwerfen der ersten Nachricht in 230 kann das Datenverarbeitungssystem darauf warten, dass die Kommunikationsvorrichtung 146 in 210 eine neue erste Nachricht empfängt.

Wenn die erste Bedingung für die erste Senderadresse erfüllt ist, kann das Datenverarbeitungssystem 140 in 222 optional bestimmen, ob eine zweite Bedingung erfüllt ist. Das Datenverarbeitungssystem 140 kann dazu ausgeführt sein, beispielsweise von dem Netzgerät 130 oder dem Leuchtmittelkörper 120 ein Signal zu empfangen, wobei das Signal eine Spannung innerhalb des Leuchtmittelkörpers 120 der Leuchte 100 indiziert. Die Spannung kann eine an ein Leuchtmittel des Leuchtmittelkörpers 120 angelegte Spannung sein. Das Datenverarbeitungssystem 140 kann dazu ausgeführt sein, auf der Grundlage des Signals die Spannung innerhalb des Leuchtmittelkörpers zu bestimmen. Ferner kann das Datenverarbeitungssystem dazu ausgeführt sein, in Abhängigkeit von der Spannung innerhalb des Leuchtmittelkörpers 120 zu bestimmen, ob die zweite Bedingung erfüllt ist.

Beispielsweise kann die zweite Bedingung erfüllt sein, wenn die Spannung innerhalb des Leuchtmittelkörpers 120 größer als ein Schwellwert ist. In einer anderen Ausführungsform kann die zweite Bedingung erfüllt sein, wenn das von dem Datenverarbeitungssystem 140 empfangene Signal indiziert, dass sich die Spannung in dem Leuchtmittelkörper 120 innerhalb einer vierten Zeitspanne von einem ersten Spannungswert auf einen zweiten Spannungswert änderte.

Wenn die zweite Bedingung nicht erfüllt ist, kann das Datenverarbeitungssystem 140 die erste Nachricht in 230 verwerfen, ohne eine Nachricht in Reaktion auf die erste Nachricht zu senden.

Wenn die zweite Bedingung erfüllt ist, kann das Datenverarbeitungssystem 140 in 224 optional bestimmen, ob eine dritte Bedingung erfüllt ist. Die dritte Bedingung kann erfüllt sein, wenn die erste Nachricht innerhalb einer dritten Zeitspanne nach dem Empfangen einer vierten Nachricht empfangen wurde, die vierte Nachricht eine zweite Senderadresse umfasst, und die zweite Senderadresse eine vierte Bedingung erfüllt, wobei die erste Senderadresse und die zweite Senderadresse verschieden sind.

Die vierte Bedingung kann eine zweite Adress-Filterung umfassen, wobei die zweite Adress-Filterung der vierten Bedingung sich von der ersten Adress-Filterung der ersten Bedingung unterscheiden kann. Insbesondere kann die vierte Bedingung erfüllt sein, wenn die zweite Senderadresse mit einer von mehreren zweiten vorkonfigurierten Senderadressen übereinstimmt.

Das Datenverarbeitungssystem kann dazu ausgeführt sein, die dritte Zeitspanne in Abhängigkeit von der zweiten Senderadresse zu bestimmen. Ferner kann das Datenverarbeitungssystem dazu ausgeführt sein, keine Nachrichten in Reaktion auf die vierte Nachricht zu senden, auch wenn die vierte Bedingung für die zweite Senderadresse erfüllt ist.

Wenn die dritte Bedingung nicht erfüllt ist, kann das Datenverarbeitungssystem 140 die erste Nachricht in 230 verwerfen, ohne eine Nachricht in Reaktion auf die erste Nachricht zu senden.

Wenn die erste Bedingung für die erste Senderadresse erfüllt ist, die zweite Bedingung erfüllt ist und die dritte Bedingung erfüllt ist, sendet das Datenverarbeitungssystem 140 in 240 die zweite Nachricht in Reaktion auf die erste Nachricht. Mit dem Senden der zweiten Nachricht kann das Datenverarbeitungssystem 140 für andere Geräte mit Kommunikationsvorrichtungen sichtbar werden. Die zweite Nachricht kann Kontrollinformationen umfassen, die von dem Sender der ersten Nachricht verwendet werden können, um eine Kommunikationsverbindung mit dem Datenverarbeitungssystem 140 aufzubauen.

In 250 kann das Datenverarbeitungssystem 140 eine dritte Nachricht empfangen, wobei die dritte Nachricht eine Zeit und/oder ein Datum umfasst. Insbesondere kann das Datenverarbeitungssystem 140 die dritte Nachricht von dem Sender der ersten Nachricht empfangen, und das Datenverarbeitungssystem kann die Zeit und/oder das Datum auf der Grundlage der dritten Nachricht bestimmen.

In 260 berechnet das Datenverarbeitungssystem 140 ein Passwort, und zwar in Abhängigkeit von der ersten Senderadresse sowie, optional, in Abhängigkeit von der Zeit und/oder dem Datum, die auf der Grundlage der dritten Nachricht bestimmt wurden.

In 270 führt das Datenverarbeitungssystem 140 eine Authentifizierung des Senders der ersten Nachricht auf der Grundlage des berechneten Passworts durch.

Wenn der Sender der ersten Nachricht in 270 erfolgreich authentifiziert wurde, erlaubt das Datenverarbeitungssystem in 280 dem Sender der ersten Nachricht den Zugriff auf die Steuerung der Leuchte.

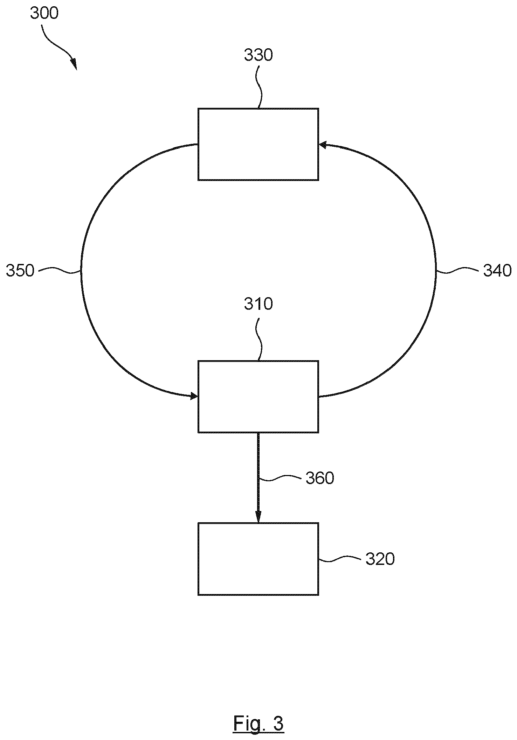

Figur 3 veranschaulicht ein Zustandsübergangsdiagramm 300 für das Datenverarbeitungssystem 140 gemäß einem Ausführungsbeispiel der Erfindung. Das Zustandsübergangsdiagramm 300 umfasst einen ersten Zustand 310, einen zweiten Zustand 320 und einen dritten Zustand 330.

Das Datenverarbeitungssystem 140 kann in dem ersten Zustand in einem Sniffer-Modus sein. Insbesondere kann das Datenverarbeitungssystem dazu ausgeführt ist, in dem ersten Zustand 310 Nachrichten zu empfangen und zu analysieren, jedoch keine Nachrichten in Reaktion auf die analysierten Nachrichten zu senden. Das Datenverarbeitungssystem 140 kann in dem ersten Zustand 310 dazu ausgeführt sein, die eigene Präsenz und/oder Identität vor anderen nachrichtentechnischen Geräten zu verbergen. Ferner kann das Datenverarbeitungssystem 140 in dem ersten Zustand dazu ausgeführt sein, keine Nachrichten zu versenden.

Ferner kann das Datenverarbeitungssystem 140 in dem ersten Zustand 310 in einem promiskuitiven Modus sein, d.h. das Datenverarbeitungssystem 140 kann dazu ausgeführt sein, von der Kommunikationsvorrichtung empfangene Nachrichten zu analysieren selbst wenn diese Nachrichten nicht für das Datenverarbeitungssystem bestimmt sind. Das Datenverarbeitungssystem 140 kann in dem ersten Zustand die Schritte 210, 212, 220, 222, 224 und 230 des Verfahrens 200 ausführen.

Ferner kann das Datenverarbeitungssystem 140 dazu ausgeführt sein, in Reaktion darauf, dass die erste Bedingung für die erste Senderadresse erfüllt ist und optional eine oder mehrere weitere Bedingungen erfüllt sind, von dem ersten Zustand 310 in den zweiten Zustand 320 zu wechseln. Der Zustandsübergang wird durch 360 veranschaulicht. Das Datenverarbeitungssystem 140 kann dazu ausgeführt sein, in dem zweiten Zustand die Schritte 240, 250, 260, 270 und 280 des Verfahrens 200 auszuführen. Insbesondere kann das Datenverarbeitungssystem 140 in dem zweiten Zustand die zweite Nachricht in Reaktion auf die erste Nachricht senden, wodurch das Datenverarbeitungssystem 140 für den Sender der ersten Nachricht und ggf. für andere Geräte mit Kommunikationsvorrichtungen sichtbar werden kann. Die zweite Nachricht kann Kontrollinformationen umfassen, die von dem Sender der ersten Nachricht verwendet werden können, um eine Kommunikationsverbindung mit dem Datenverarbeitungssystem 140 aufzubauen.

Ferner kann das Datenverarbeitungssystem 140 dazu ausgeführt sein, nach Ablauf einer ersten Zeitspanne von dem ersten Zustand 310 in den dritten Zustand 330 zu wechseln. Der Zustandsübergang wird durch 340 veranschaulicht. Das Datenverarbeitungssystem 140 kann somit dazu ausgeführt sein, von dem ersten Zustand 310 in den dritten Zustand 330 zu wechseln, wenn es für die erste Zeitspanne in dem ersten Zustand war ohne eine Nachricht zu empfangen, deren Senderadresse die erste Bedingung erfüllt und optional die eine oder die mehreren weiteren Bedingungen erfüllt sind.

In dem dritten Zustand 330 ist das Datenverarbeitungssystem 140 dazu konfiguriert, keine Nachrichten zu empfangen. Ferner kann das Datenverarbeitungssystem 140 dazu ausgeführt sein, nach Ablauf einer zweiten Zeitspanne von dem dritten Zustand 330 in den ersten Zustand 310 zu wechseln. In dem ersten Zustand 310 ist das Datenverarbeitungssystem 140 insbesondere dazu konfiguriert, Nachrichten zu empfangen.

Ergänzend sei darauf hingewiesen, dass "umfassend" und "aufweisend" keine anderen Elemente ausschließen und die unbestimmten Artikel "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können.

### Bezugszeichen:

- 100: Leuchte
- 110: Gehäuse
- 120: Leuchtmittelkörper
- 130: Netzgerät
- 140: Datenverarbeitungssystem
- 142: Prozessor
- 144: Speicher
- 146: Kommunikationsvorrichtung
- 200: Verfahren zur Kontrolle des Zugriffs auf die Steuerung einer Leuchte
- 210: Empfangen der ersten Nachricht
- 212: Bestimmen der ersten Senderadresse
- 220: Bestimmen, ob die erste Bedingung für die erste Senderadresse erfüllt ist
- 222: Bestimmen, ob die zweite Bedingung erfüllt ist
- 224: Bestimmen, ob die dritte Bedingung erfüllt ist
- 240: Senden der zweiten Nachricht in Reaktion auf die erste Nachricht
- 250: Empfangen der dritten Nachricht umfassend eine Zeit und/oder ein Datum
- 260: Berechnen des Passworts
- 270: Authentifizieren des Senders der ersten Nachricht
- 280: Erlauben des Zugriffs auf die Steuerung der Leuchte
- 300: Zustandsübergangsdiagramm
- 310: Erster Zustand, promiskuitiver Sniffer-Modus
- 320: Zweiter Zustand, Sichtbarschalten der Leuchte
- 330: Dritte Zustand, Deaktivieren des Empfangens von Nachrichten
- 340: Zustandsübergang infolge des Ablaufs der ersten Zeitspanne
- 350: Zustandsübergang infolge des Ablaufs der zweiten Zeitspanne
- 360: Zustandsübergang, wenn die erste und ggf. weitere Bedingungen erfüllt sind

## Patentansprüche

1. Verfahren (200) zur Kontrolle eines Zugriffs auf eine Steuerung einer Leuchte (100), wobei das Verfahren von einem Datenverarbeitungssystem (140) der Leuchte (100) ausgeführt wird und das Verfahren umfasst:
Empfangen (210) einer ersten Nachricht durch eine Kommunikationsvorrichtung (146) des Datenverarbeitungssystems (140);
Bestimmen einer ersten Senderadresse auf der Grundlage der ersten Nachricht;
in Abhängigkeit von der ersten Senderadresse, Bestimmen (220), ob eine erste Bedingung erfüllt ist; und
wenn die erste Bedingung für die erste Senderadresse nicht erfüllt ist,
Verwerfen (230) der ersten Nachricht, ohne eine Nachricht in Reaktion auf die erste Nachricht zu senden; und
wenn die erste Bedingung für die erste Senderadresse erfüllt ist und optional eine oder mehrere weitere Bedingungen erfüllt sind, Senden (240) einer zweiten Nachricht in Reaktion auf die erste Nachricht;
wobei das Verfahren ferner umfasst:
Berechnen (260) eines Passworts in Abhängigkeit von der ersten Senderadresse;
Authentifizieren (270) eines Senders der ersten Nachricht auf der Grundlage des berechneten Passworts; und
Erlauben (280) eines Zugriffs auf die Steuerung der Leuchte (100) durch den Sender der ersten Nachricht, wenn der Sender der ersten Nachricht erfolgreich authentifiziert wurde.

2. Verfahren (200) nach Anspruch 1,
wobei das Datenverarbeitungssystem (140) in Reaktion darauf, dass die erste Bedingung für die erste Senderadresse erfüllt ist und optional die eine oder mehreren weiteren Bedingungen erfüllt sind, von einem ersten Zustand (310) in einen zweiten Zustand (320) wechselt,
wobei das Datenverarbeitungssystem (140) in dem ersten Zustand (310) in einem Sniffer-Modus ist; und
wobei das Datenverarbeitungssystem (140) die zweite Nachricht in dem zweiten Zustand sendet (240).

3. Verfahren (200) nach Anspruch 2,
wobei das Datenverarbeitungssystem (140) in dem ersten Zustand (310) in einem promiskuitiven Modus ist.

4. Verfahren (200) nach einem der vorherigen Ansprüche,
wobei die erste Senderadresse einen Abschnitt einer physischen Adresse und/oder einen Abschnitt einer Internet Protokoll-Adresse umfasst.

5. Verfahren (200) nach einem der vorherigen Ansprüche,
wobei das Passwort zusätzlich in Abhängigkeit von einer Zeit und/oder einem Datum berechnet (260) wird.

6. Verfahren (200) nach Anspruch 5, ferner umfassend
Empfangen (250) einer dritten Nachricht mittels der Kommunikationsvorrichtung (146), wobei die dritte Nachricht die Zeit und/oder das Datum umfasst.

7. Verfahren (200) nach einem der vorherigen Ansprüche, wobei das Datenverarbeitungssystem (140) die zweite Nachricht in Reaktion auf die erste Nachricht sendet (240), wenn die erste Bedingung für die erste Sendeadresse erfüllt ist und eine zweite Bedingung erfüllt ist und optional eine oder mehrere weitere Bedingungen erfüllt sind, und das Verfahren ferner umfasst:
Empfangen eines Signals, wobei das Signal eine Spannung innerhalb eines Leuchtmittelkörpers der Leuchte indiziert; und
in Abhängigkeit von der Spannung innerhalb des Leuchtmittelkörpers,
Bestimmen (222), ob die zweite Bedingung erfüllt ist.

8. Verfahren (200) nach einem der vorherigen Ansprüche, ferner umfassend
Deaktivieren des Empfangens von Nachrichten nach Ablauf einer ersten Zeitspanne; und/oder
Aktivieren des Empfangens von Nachrichten nach Ablauf einer zweiten Zeitspanne.

9. Verfahren (200) nach einem der vorherigen Ansprüche,
wobei das Datenverarbeitungssystem (140) die zweite Nachricht in Reaktion auf die erste Nachricht sendet, wenn die erste Bedingung für die erste Sendeadresse erfüllt ist und eine dritte Bedingung erfüllt ist und optional eine oder mehrere weitere Bedingungen erfüllt sind;
wobei die dritte Bedingung erfüllt ist, wenn die erste Nachricht innerhalb einer dritten Zeitspanne nach dem Empfangen einer vierten Nachricht empfangen wurde, die vierte Nachricht eine zweite Senderadresse umfasst, und die zweite Senderadresse eine vierte Bedingung erfüllt; und
wobei die erste Senderadresse und die zweite Senderadresse verschieden sind.

10. Datenverarbeitungssystem (140) umfassend eine Kommunikationsvorrichtung (146), wobei das Datenverarbeitungssystem dazu ausgeführt ist, ein Verfahren (200) nach einem der vorherigen Ansprüche auszuführen.

11. Leuchte (100) umfassend ein Datenverarbeitungssystem (140) nach Anspruch 10.

12. Computerprogramm umfassend Befehle, die bewirken, dass das Datenverarbeitungssystem (140) nach Anspruch 10 ein Verfahren (200) nach einem der Ansprüche 1 bis 9 ausführt.

13. Computerlesbares Medium, auf dem das Computerprogramm nach Anspruch 12 gespeichert ist.

## Claims

1. A method (200) for controlling access to a controller of a luminaire (100), the method being performed by a data processing system (140) of the luminaire (100), the method comprising:
receiving (210), by a communication device (146) of the data processing system (140), a first message;
determining a first sender address based on the first message;
depending on the first sender address, determining (220) whether a first condition is met; and
if the first condition is not met for the first sender address, discarding (230) the first message without sending a message in response to the first message; and
if the first condition is met for the first sender address and optionally one or more further conditions are met, sending (240) a second message in response to the first message;
the method further comprising:
calculating (260) a password depending on the first sender address;
authenticating (270) a sender of the first message based on the calculated password; and
allowing (280) access to the control of the luminaire (100) by the sender of the first message if the sender of the first message has been successfully authenticated.

2. The method (200) of claim 1,
wherein the data processing system (140) changes from a first state (310) to a second state (320) in response to the first condition being met for the first sender address and optionally the one or more further conditions being met,
wherein the data processing system (140) is in a sniffer mode in the first state (310); and
wherein the data processing system (140) sends (240) the second message in the second state.

3. The method (200) of claim 2,
wherein the data processing system (140) is in a promiscuous mode in the first state (310).

4. The method (200) of any one of the preceding claims,
wherein the first sender address comprises a portion of a physical address and/or a portion of an Internet Protocol address.

5. The method (200) of any one of the preceding claims,
wherein the password is additionally calculated (260) depending on a time and/or a date.

6. The method (200) of claim 5, further comprising
receiving (250), by the communication device (146), a third message, wherein the third message comprises the time and/or the date.

7. The method (200) of any one of the preceding claims, wherein the data processing system (140) sends (240) the second message in response to the first message if the first condition for the first sending address is satisfied and a second condition is satisfied and optionally one or more further conditions are satisfied, and the method further comprises:
receiving a signal, wherein the signal indicates a voltage within a lamp body of the luminaire; and
depending on the voltage within the lamp body, determining (222) whether the second condition is met.

8. The method (200) of any one of the preceding claims, further comprising
disabling the receiving of messages after expiration of a first time period; and/or
enabling the receiving of messages after expiration of a second time period.

9. The method (200) of any one of the preceding claims,
wherein the data processing system (140) sends the second message in response to the first message if the first condition is met for the first sending address and a third condition is met and optionally one or more further conditions are met;
wherein the third condition is met if the first message was received within a third time period after receiving a fourth message, the fourth message comprises a second sender address, and the second sender address meets a fourth condition; and
wherein the first sender address and the second sender address are different.

10. A data processing system (140) comprising a communication device (146), wherein the data processing system is adapted to perform a method (200) according to any one of the preceding claims.

11. A luminaire (100) comprising a data processing system (140) according to claim 10.

12. A computer program comprising instructions which cause the data processing system (140) according to claim 10 to perform a method (200) according to any one of claims 1 to 9.

13. A computer readable medium on which the computer program according to claim 12 is stored.

## Revendications

1. Procédé (200) de contrôle d'accès à un dispositif de commande d'un luminaire (100), le procédé étant exécuté par un système de traitement de données (140) du luminaire (100) et le procédé comprenant :
la réception (210) d'un premier message par un dispositif de communication (146) du système de traitement de données (140) ;
la détermination d'une première adresse d'émetteur sur la base du premier message ;
la détermination (220), en fonction de la première adresse d'émetteur, si une première condition est satisfaite ; et
si la première condition n'est pas satisfaite pour la première adresse d'émetteur, le rejet (230) du premier message sans envoyer de message en réponse au premier message ; et
si la première condition est satisfaite pour la première adresse d'émetteur et, facultativement, une ou plusieurs autres conditions sont satisfaites, l'envoi (240) d'un deuxième message en réponse au premier message ;
le procédé comprenant en outre :
le calcul (260) d'un mot de passe en fonction de la première adresse d'émetteur ;
l'authentification (270) d'un émetteur du premier message sur la base du mot de passe calculé ; et
l'autorisation (280) d'accès au dispositif de commande du luminaire (100) par l'émetteur du premier message si l'émetteur du premier message a été authentifié avec succès.

2. Procédé (200) selon la revendication 1,
dans lequel le système de traitement de données (140) passe d'un premier état (310) à un second état (320) en réponse au fait que la première condition est satisfaite pour la première adresse d'émetteur et, facultativement, les une ou plusieurs autres conditions sont satisfaites,
dans lequel le système de traitement de données (140) est dans un mode flaireur dans le premier état (310) ; et
dans lequel le système de traitement de données (140) envoie (240) le deuxième message dans le second état.

3. Procédé (200) selon la revendication 2,
dans lequel le système de traitement de données (140) est dans un mode promiscuité dans le premier état (310).

4. Procédé (200) selon l'une quelconque des revendications précédentes,
dans lequel la première adresse d'émetteur comprend une partie d'une adresse physique et/ou une partie d'une adresse de protocole Internet.

5. Procédé (200) selon l'une quelconque des revendications précédentes,
dans lequel le mot de passe est en outre calculé (260) en fonction d'une heure et/ou d'une date.

6. Procédé (200) selon la revendication 5, comprenant en outre
la réception (250) d'un troisième message par le dispositif de communication (146), le troisième message comprenant l'heure et/ou la date.

7. Procédé (200) selon l'une quelconque des revendications précédentes, dans lequel le système de traitement de données (140) envoie (240) le deuxième message en réponse au premier message si la première condition est satisfaite pour la première adresse d'émetteur et une seconde condition est satisfaite et, facultativement, une ou plusieurs autres conditions sont satisfaites, et le procédé comprenant en outre :
la réception d'un signal, le signal indiquant une tension à l'intérieur d'une base de lampe du luminaire ; et
la détermination (222), en fonction de la tension à l'intérieur de la base de lampe, si la seconde condition est satisfaite.

8. Procédé (200) selon l'une quelconque des revendications précédentes, comprenant en outre
la désactivation de la réception de messages après l'expiration d'une première période de temps ; et/ou
l'activation de la réception de messages après l'expiration d'une seconde période de temps.

9. Procédé (200) selon l'une quelconque des revendications précédentes,
dans lequel le système de traitement de données (140) envoie le deuxième message en réponse au premier message si la première condition est satisfaite pour la première adresse d'émetteur et une troisième condition est satisfaite et, facultativement, une ou plusieurs autres conditions sont satisfaites ;
dans lequel la troisième condition est satisfaite si le premier message a été reçu dans une troisième période de temps après la réception d'un quatrième message, le quatrième message comprend une seconde adresse d'émetteur, et la seconde adresse d'émetteur satisfait une quatrième condition ; et
dans lequel la première adresse d'émetteur et la seconde adresse d'émetteur sont différentes.

10. Système de traitement de données (140) comprenant un dispositif de communication (146), le système de traitement de données étant configuré pour exécuter un procédé (200) selon l'une quelconque des revendications précédentes.

11. Luminaire (100) comprenant un système de traitement de données (140) selon la revendication 10.

12. Programme informatique comprenant des instructions qui amènent le système de traitement de données (140) selon la revendication 10 à exécuter un procédé (200) selon l'une quelconque des revendications 1 à 9.

13. Support lisible par ordinateur sur lequel est stocké le programme informatique selon la revendication 12.
